# EUROPEAN PATENT APPLICATION

(11) **EP 4 525 270 A1**
(43) Date of publication of application: **19.03.2025**
(21) Application number: 23196911.4
(22) Date of filing: 12.09.2023
(51) Int. Cl.: H02J 50/12, H02J 50/60, H02J 50/80, H04B 5/79, G06F 8/65

(54) **WIRELESS POWER TRANSFER**

(71) Applicant: Koninklijke Philips N.V., 5656 AG Eindhoven (NL)
(72) Inventor: AGAFONOV, Aleksei, 5656AG Eindhoven (NL); LEBENS, Pascal Leonard Maria Theodoor, 5656AG Eindhoven (NL); DRAAK, Johannes Wilhelmus, 5656AG Eindhoven (NL)
(74) Representative: Philips Intellectual Property & Standards

(57) **Abstract**

A power transmitter (101) provides wireless power to a power receiver (105). The power transmitter (101) comprises a transmitter coil (103) and a driver (301) arranged to generate a drive signal for the output resonance circuit (103, 303) to generate the electromagnetic signal when in the power transfer phase. A communicator (307) can communicate with the power receiver (105) using a communication carrier and receive data load modulated on the communication carrier. An object detector (311) can detect an object and in response a controller (313) controls the communicator (307) to receive configuration data load modulated on to the communication carrier. The controller (313) initiates a power transfer phase in response to the configuration data being indicative of a power receiver requesting power transfer and an update phase in response to the configuration data being indicative of an update entity comprising update data. An update processor (315) controls the communicator (307) to receive update data from the update entity and to perform an update operation using the update data.

## Description

### FIELD OF THE INVENTION

The invention relates to wireless power transfer and in particular, but not exclusively, to the operation of a wireless power transfer system and power receiver providing inductive power transfer to high power devices, such as e.g. kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2kW.

Although such wireless power transfer approaches and devices operate in accordance with a well defined standard, the desired functionality of the power receivers and/or power transmitters is likely to change with time. For example, the Standards are likely to be further developed and possibly expanded to provide for additional functionality or services. Further, new proprietary and non-standardized functionality and services may be introduced and be desired for existing and deployed devices.

For example, like many other contemporary technologies, Ki cordless kitchen allows intelligent functions implemented in both the wireless power transmitter (e.g. cooktop) and the wireless power receiver (e.g. appliance). An example of such an intelligent function is authentication when either the power transmitter or the power receiver or both of them are required to be authenticated by exchange of cryptographic certificates. Another example of such a smart function is smart cooking when the appliance uploads a set of instructions defined by the recipe to the power transmitter and leaves the control over the cooking to the power transmitter.

It is expected that the amount and content of such smart functions will increase substantially, and later revisions of the Standard are expected to implement a more versatile set of auxiliary functions than implemented in the original release. However, the implementation of such smart functions is often proprietary and therefore are difficult to introduce to existing deployed systems. For example, they may be based on a common hardware-software interface which however is under the control of the proprietary manufacturer.

Typically, this problem of provisioning new functionality is more acute for the power transmitters than the power receivers. Usually, it is expected that the function of the power receiver is utilitarian and does not change over time. The functionality of the power transmitter might, however, extend when new types of appliances are introduced to the standard.

It is also desirable to be able to update performance and operations of a wireless power transfer system to accommodate for changes in the operation or context of the system. For example, additional constraints or requirements may be imposed in order to e.g. increase security, reliability, and/or safety of the operation.

Accordingly, the ability to update elements of a wireless power transfer system is important for many practical applications. It is desired that such updating is e.g. reliable, user friendly, safe, secure, easy to implement, and practical.

Typically, updating of devices is performed via an Internet connection and some wireless power devices may be arranged to perform an update by accessing central servers and retrieving suitable data therefrom. However, in many wireless power transfer applications it is not practical, or even possible, for all devices to have Internet access or access to such a central server. For example, the power transmitter manufacturer is not obliged to implement the connectivity functionality which may add cost, the user might not want to integrate the power device into a network, etc.

Accordingly, an improved power transfer approach/system would be advantageous and, in particular, an approach allowing improved update functionality/options including e.g. improved reliability, user friendliness, safety, security, facilitated implementation, and practicality. Specifically, a wireless power transfer approach/system providing increased flexibility, reduced cost, reduced complexity, improved operation, improved update functions, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power transmitter for wirelessly providing power to a power receiver via an electromagnetic power transfer signal when in a power transfer phase; the power transmitter comprising: an output resonance circuit comprising a transmitter coil and at least one capacitor forming a resonance circuit; a driver arranged to generate a drive signal for the output resonance circuit to generate the electromagnetic power transfer signal when in the power transfer phase; a communicator arranged to communicate with the power receiver, the communicator being arranged to generate a communication carrier and to receive data load modulated on the communication carrier by the power receiver when in the power transfer phase; an object detector arranged to detect an object when the power transmitter is in an idle phase; a controller arranged to, in response to the object detection, control the communicator to generate the communication carrier and receive configuration data load modulated on to the communication carrier, the controller further being arranged to initiate a power transfer phase in response to the configuration data being indicative of a power receiver requesting power transfer, and to initiate an update phase in response to the configuration data being indicative of an update entity comprising update data; and an update processor arranged to control the communicator to receive update data from the update entity and to perform an update operation using the update data when in the update phase.

The approach may allow an improved and/or user friendly update process for wireless power transfer entities, such as specifically the power transmitter itself, and/or in some cases e.g. a power receiver later connecting to the power transmitter. The approach may allow efficient updating without requiring that the power transmitter connects to e.g. a remote server or a network, e.g. such as specifically the network. The approach may allow updating of wireless power transfer devices without requiring any additional or dedicated communication functionality. Rather, efficient updating of devices can be achieved using power transfer functionality, and specifically power transfer communication functionality. The approach may for example allow dedicated update devices, such as e.g. Smart Cards, to be used for distributing update data that allows efficient updating of deployed devices while maintaining a low complexity (and typically cost) of the power transmitter. The approach may reduce the functionality required for updating the power transmitter, or e.g. power receivers of the wireless power transfer system.

The approach may for example be highly suitable for many wireless power transfer transmitter appliances, such as for example for kitchen applications, where no general communication functionality is implemented. In such cases, updating may simply be achieved by a manufacturer or provider distributing a Smart Card or similar physical device that may simply be placed in the operating volume of the power transmitter resulting in an automatic update.

The controller may be arranged to, in response to the object detection, control the communicator to generate the communication carrier and receive configuration data load modulated on to the communication carrier during an object detection phase, the controller further being arranged to initiate a power transfer phase in response to the configuration data being indicative of (a detected object being) a power receiver requesting power transfer (being present), and to initiate an update phase in response to the configuration data being indicative of (the detected object being) an update entity comprising update data (being present).

The update operation may be a device update operation/ a power receiver update operation/ a power transmitter update operation. The update operation may comprise storing the update data (and possibly later transmitting to another device, such as a power receiver). The update operation may be a modification, deletion, or addition of a function and/or operation performed by the power transmitter and/or a power receiver.

According to an optional feature of the invention, the update data comprises authentication data and the update processor is arranged to update stored authentication data in dependence on the received authentication data.

The approach may provide a particularly efficient and/or user friendly updating of authentication data thereby allowing e.g. an efficient update and maintaining of e.g. which power receivers are allowed to be provided with wireless power. The update data may for example provide a list of revoked or authenticated power receivers.

According to an optional feature of the invention, the update data comprises software update data for the power transmitter and the update processor is arranged to update firmware of the power transmitter using the received firmware update data.

The approach may provide a particularly efficient and/or user friendly updating of software/firmware thereby allowing e.g. an efficient update and maintaining of e.g. which power receivers are allowed to be provided with wireless power. The update data may for example provide a list of revoked or authenticated power receivers. The software update data may specifically be firmware update data. The update data may specifically be update data for a power transfer operation of the power transmitter (or a power receiver).

According to an optional feature of the invention, the update data comprises power receiver update data, and the update processor is arranged to store the power receiver update data and to subsequently transmit the power receiver update data to a given power receiver subsequently establishing a communication link with the communicator.

The approach may provide a particularly efficient and/or user friendly updating of power receivers in a wireless power transfer system without requiring any dedicated communication functionality of power receivers to use any other communication means than those used for power transfer operations. The approach may allow update data for power receivers to be flexibly and efficiently distributed to different power receivers in an ad-hoc manner.

According to an optional feature of the invention, the power receiver update data is linked with a required power receiver property and the update processor is arranged to transmit the power receiver update data to the given power receiver only if this has a property matching the required power receiver property.

This may provide improved and/or facilitated operation and/or implementation in many scenarios.

According to an optional feature of the invention, the update processor is arranged to receive a power receiver property indication from the given power receiver, the power receiver property indication being indicative of the property of the given power receiver and being at least one of: a power receiver identity indication; a power receiver device model indication; and a manufacturer indication.

This may provide improved and/or facilitated operation and/or implementation in many scenarios.

According to an optional feature of the invention, the update data includes an indication of a type of update data being provided.

This may provide improved and/or facilitated operation and/or implementation in many scenarios. The update data may include an indication of the type of update data as being at least one from the group of (one or more of): software update data, firmware update data, authentication update data, power receiver update data, and power transmitter update data.

According to an optional feature of the invention, the power transmitter is arranged to select between initiating the power transfer phase and initiating the update phase in a case where the configuration data is indicative of both a power receiver requesting power transfer and of an update entity comprising update data.

This may provide improved and/or facilitated operation and/or implementation in many scenarios.

According to an optional feature of the invention, the configuration data is received in an NFC Data Exchange Format, NDEF, message of a Near Field Communication, NFC, protocol used by the communicator.

This may provide improved and/or facilitated operation and/or implementation in many scenarios.

According to an aspect of the invention, there is provided an update device for a wireless power transfer system comprising a power transmitter for wirelessly providing power to a power receiver via an electromagnetic power transfer signal, the update device comprising: a store arranged to store update data for at least one of a power transmitter and a power receiver; a detector arranged to detect a presence of a communication carrier from the power transmitter; a communicator arranged to transmit configuration data and the update data to the power transmitter by load modulating the communication carrier, the configuration data comprising an indication of an update entity arranged to transmit update data to the power transmitter.

The approach may allow an improved and/or user friendly update process for wireless power transfer entities, such as specifically the power transmitter itself, and/or in some cases e.g. a power receiver later connecting to the power transmitter. A update device may be physically brought into proximity of a power transmitter resulting in an update process being initiated. A update device may be a low complexity and low cost device.

According to an optional feature of the invention, the update device is arranged to not extract any power from the electromagnetic power transfer signal.

This may provide improved and/or facilitated operation and/or implementation in many scenarios. The update data may be arranged to extract power from the communication carrier.

According to an optional feature of the invention, the update comprises a receiver arranged to receive an update process complete indication from the power transmitter, the update process complete indication being indicative of an update process having completed, and a user interface arranged to generate a user alert in response to receiving the update process complete indication.

This may provide improved and/or facilitated operation and/or implementation in many scenarios. The update process complete indication may indicate e.g. that an update of the power transmitter has been completed or e.g. that the update data has been received. The user alert may e.g. be an LED.

A power receiver may comprise an update device as indicated above and further be arranged to receive wireless power to power a load.

According to an aspect of the invention, there is provided method of operation for a power transmitter for wirelessly providing power to a power receiver via an electromagnetic signal when in a power transfer phase; the power transmitter comprising: an output resonance circuit comprising a transmitter coil and at least one capacitor forming a resonance circuit; a driver arranged to generate a drive signal for the output resonance circuit to generate the electromagnetic signal when in the power transfer phase; a communicator arranged to communicate with the power receiver, the communicator being arranged to generate a communication carrier and to receive data load modulated on the communication carrier by the power receiver when in the power transfer phase; and the method comprising: detecting an object when the power transmitter is in an idle phase; in response to the object detection, controlling the communicator to generate the communication carrier and receive configuration data load modulated on to the communication carrier, initiating a power transfer phase in response to the configuration data being indicative of a power receiver requesting power transfer, and initiating an update phase in response to the configuration data being indicative of an update entity comprising update data; and receiving update data from the update entity and to perform an update operation using the update data when in the update phase.

According to an aspect of the invention, there is provided method of operation for an update device for a wireless power transfer system comprising a power transmitter for wirelessly providing power to a power receiver via an electromagnetic power transfer signal, the method comprising: storing update data for at least one of a power transmitter and a power receiver; detecting a presence of a communication carrier from the power transmitter; and transmitting configuration data and the update data to the power transmitter by load modulating the communication carrier, the configuration data comprising an indication of an update entity arranged to transmit update data to the power transmitter.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of an electrical equivalence diagram for the power transfer function;
FIG. 3 illustrates an example of elements of a power transmitter in accordance with some embodiments of the invention;
FIG. 4 illustrates an example of a half bridge inverter for a power transmitter;
FIG. 5 illustrates an example of a full bridge inverter for a power transmitter;
FIG. 6 illustrates an example of elements of a power receiver in accordance with some embodiments of the invention;
FIG. 7 illustrates an example of elements of an update device in accordance with some embodiments of the invention;
FIG. 8 illustrates an example of elements of a process of updating a wireless power transfer system in accordance with some embodiments of the invention;
FIG. 9 illustrates an example of elements of a process of updating a wireless power transfer system in accordance with some embodiments of the invention; and
FIG. 10 illustrates an example of elements of a process of updating a wireless power transfer system in accordance with some embodiments of the invention.

### DETAILED DESCRIPTION OF EMBODIMENTS

The following description focuses on embodiments of the invention applicable to a wireless power transfer system utilizing a power transfer approach such as is known from the Qi Specification or the Ki Specification. However, it will be appreciated that the invention is not limited to this application but may be applied to many other wireless power transfer systems.

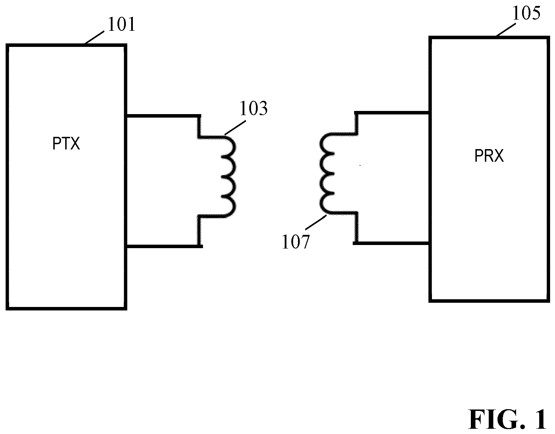

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. During power transfer, the electromagnetic signal transfers power to the power receiver 105 (and specifically to the receiver coil 107) and it will in the following be referred to as the power transfer signal.

The power transfer signal may typically have a frequency between around 20 kHz to around 500 kHz, and often for Qi compatible systems typically in the range from 95 kHz to 205 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal! magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.2, in the range up to 100W for higher power applications such as power tools, laptops, drones, robots etc., and in excess of 100 W and up to more than 2000W for very high power applications, such as e.g. for Ki kitchen applications.

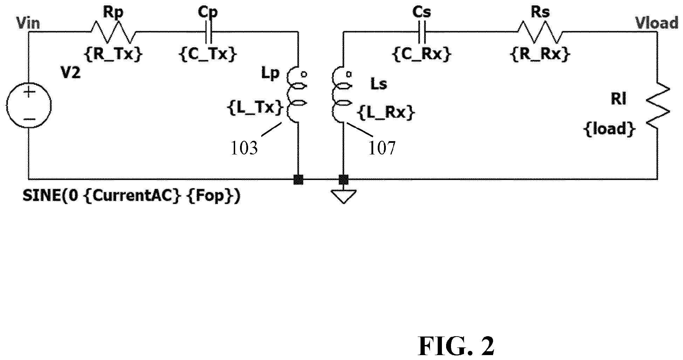

An example of an electrical equivalence diagram for the power transfer function of the power transmitter 101 and the power receiver 105 is illustrated in FIG. 2. A wide range of power transmitters and power receivers may exist in a given system and these may have substantially different properties and parameters. For example, the coil sizes, induction values, and loads may vary substantially. Accordingly, the system parameters, as specifically represented in FIG. 2, may in practice vary significantly between different devices, mechanical constructions, positioning etc. In particular, the placement of the power receiver, and thus the relative positions of the receiver coil 107 and the transmitter coil 103, substantially affect the coupling between the coils, i.e. the primary (power transmitter side) inductor Lp and the secondary (power transmitter side) inductor Ls, and thus may significantly change the system behavior.

In the following, the operation of the power transmitter 101 and the power receiver 105 will be described with specific reference to an embodiment generally in accordance with the Qi or Ki Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In most power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

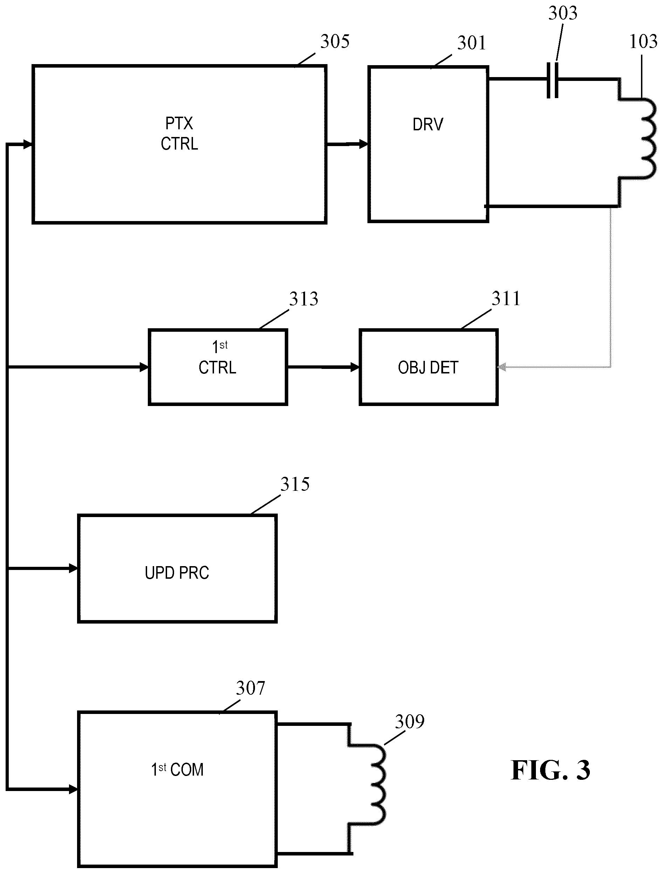

FIG. 3 illustrates exemplary elements of the power transmitter 101 of FIG. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

The use of a resonance circuit including the transmitter coil 103 is well known to provide a more efficient power transfer in many scenarios and enables control of the power transfer by the frequency of the drive signal. Furthermore, having a power receiver which also employs a resonance circuit, i.e. where the receiver coil 107 is part of a resonance circuit, may result in resonant power transfer which enables a highly efficient power transfer.

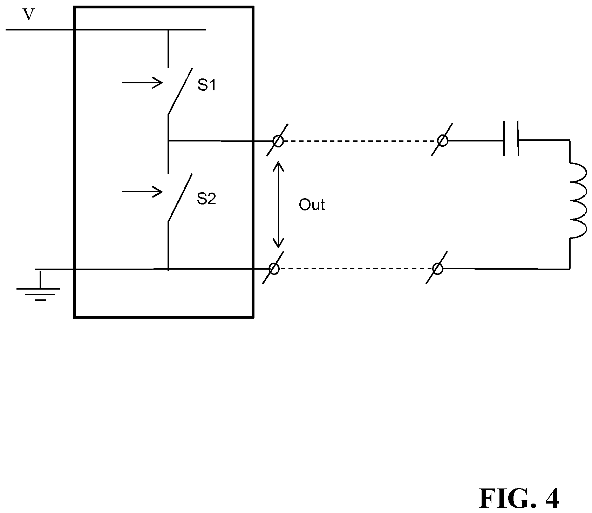

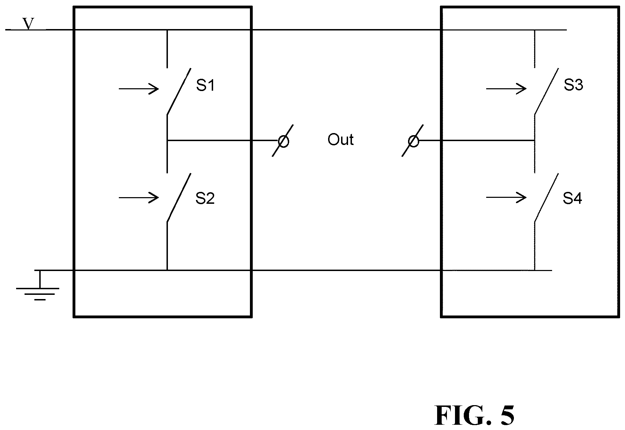

The driver 301 generates the current and voltage which is fed to the output resonance circuit and thus to the transmitter coil 103. The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1 and S4 are closed while S2 and S3 are open, and then S2 and S3 are closed while S1 and S4 or open, thereby creating a square-wave signal at the output. The switches are opened and closed with the desired frequency.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 305 is in particular arranged to control the generation of the drive signal by the driver 301, and it can specifically control the power level of the drive signal, and accordingly the level of the generated power transfer signal. The power transmitter controller 305 comprises a power loop controller controlling a power level of the power transfer signal in response to the power control messages received from the power receiver 105 during the power transfer phase.

In the example of the power transmitter of FIG. 3, the power transmitter 101 comprises a first communicator 307 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 309. The first communicator 307 is coupled to the first communication coil 309 and is arranged to generate a communication drive signal which is fed to the first communication coil 309 to generate the communication carrier. The first communicator 307 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz. Specifically for an NFC implementation, the communication carrier signal frequency may be 13.56 MHz.

The first communicator 307 may be arranged to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

For communication from the power receiver to the power transmitter, the modulation of the communication drive signal may be a load modulation. The power receiver may be arranged to modulate the communication drive signal by varying a loading of the communication drive signal generated by the communication coil 309 in accordance with the data to be transmitted. The first communicator 307 is specifically arranged to sense variations in the voltage and/or current of the communication coil 307 and to demodulate the load modulation based on these. In typical embodiments, the first communicator 307 may for example receive data from the power receiver and forward it to the power transmitter controller 305 for controlling the power transfer signal etc.

In some embodiments, the communication may be in accordance with the Near Field Communication, NFC, Specifications and the power receiver may specifically include NFC functionality. In these embodiments, the first communicator 307 and the first communication coil 309 may implement (at least) the functionality of an NFC reader. Thus, in some embodiments, the communication drive signal! communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

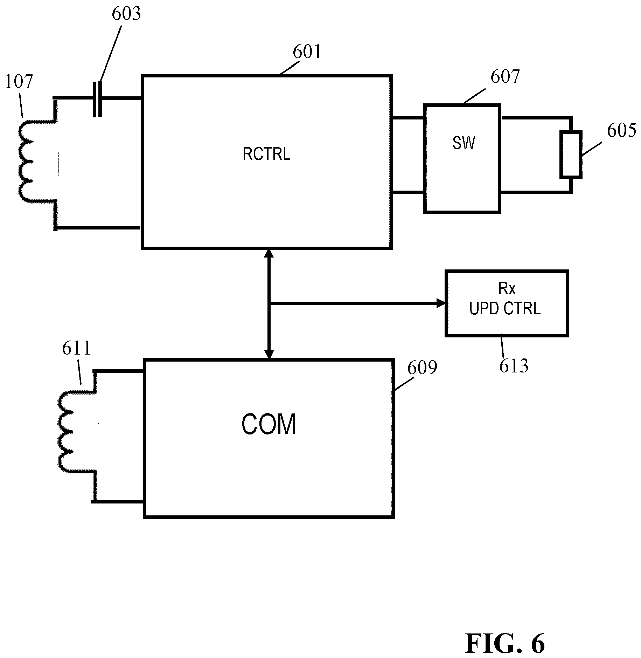

FIG. 6 illustrates some exemplary elements of the power receiver 105.

The receiver coil 107 is coupled to a power receiver controller 601 via a capacitor 603 which together with the receiver coil 107 forms an input resonance circuit. Thus, the power transfer may be a resonant power transfer between resonance circuits.

The power receiver controller 601 couples the receiver coil 107 to a load 605 via a switch 607 which specifically may be capable of connecting, disconnecting (or even shorting) the load 605. The power receiver controller 601 includes a power control path which converts the power extracted by the receiver coil 107 into a suitable supply for the load 605. In some embodiments, the power receiver controller 601 may provide a direct power path which simply connections the input resonance circuit to the switch 607 or load 605, i.e. the power path of the power transmitter controller 303 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Qi or Ki Specifications.

The power receiver controller 601 may further comprise functionality for communicating with the power transmitter 101. For example, it may be arranged to decode and demodulate data modulated onto the power transfer signal and it may be arranged to transmit data to the power transmitter 101 by load modulating the power transfer signal. In some embodiments, a separate communication function, such as an NFC communication function may be employed.

In the example of the power receiver of FIG. 6, the power receiver 105 comprises a second communicator 609 and a second communication coil 611. The second communication coil 611 is arranged to couple to the first communication coil 309 and thus the communication carrier signal induces a current (at least an emf) in the second communication coil 611.

The second communicator 609 is coupled to the second communication coil 611 and is arranged to determine amplitude variations in the induced signal and to demodulate amplitude modulations of the communication carrier signal. Thus, the second communicator 609 is arranged to decode data transmitted from the power transmitter by amplitude modulation of the communication carrier signal. It will be appreciated that in other embodiments, the second communicator 609 may be arranged to decode data modulated onto the communication carrier signal using other modulation formats such as frequency or phase modulation.

The second communicator 609 is further arranged to load modulate the communication carrier signal in order to transmit data from the power receiver to the power transmitter. Specifically, the second communicator 609 may comprise a load (such as a capacitor) which depending on the data to transmit can be switched between being coupled to the second communication coil 611 and not being coupled to the second communication coil 611. These load modulations may then be detected by the first communicator 307 of the power transmitter.

In the specific example, the second communication coil 611 and the second communicator 609 may provide NFC compatible communication operation. Specifically, the second communication coil 611 may be arranged to provide functionality corresponding to an NFC tag and to decode data that has been ASK modulated onto the communication carrier signal in accordance with the NFC specifications.

Thus, the second communicator 609 is arranged to transmit data to the power transmitter by varying the loading of the second communication coil 611 in response to data to be transmitted to the power transmitter 101. The load variations are then detected and demodulated by the power transmitter 101 as will be known to the person skilled in the art.

In the example, the second communicator 609 is furthermore arranged to demodulate amplitude, frequency, and/or phase modulation of the communication carrier signal in order to retrieve data transmitted from the power transmitter.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver. A power control loop is accordingly employed which controls a power property of the power transfer signal to result in the desired operating point at the power receiver. It will be appreciated that many other types of data may be exchanged between the power transmitter and the power receiver to support a range of functions.

The power transmitter further comprises functionality which provides support for updating of the power transmitter, or indeed in some cases power receivers that couple to the power transmitter. The approach allows such updating without requiring the devices to be coupled to the Internet or to a central update server etc. The approach may support low complexity and user friendly updating while providing an efficient approach that may easily be introduced in many systems.

The power transmitter comprises an object detector 311 which is arranged to detect an object when the power transmitter is in an idle phase. During the idle phase, no power transfer using the power transfer signal is active, and in many cases no communication is exchanged with any other device. Indeed, in the idle phase, the power transmitter may be fully inactive except for the object detection. The power transmitter may be arranged to enter the idle phase in response to a detection that no power receiver is present proximal to the transmitter coil 103/ coupling to the transmitter coil 103. In many embodiments, the power transmitter may be arranged to enter the idle mode in response to a determination that no communication receiver coil is present that couples to the (first) communication coil of the power transmitter. In some embodiments, the power transmitter may be arranged to enter the idle phase in response to a detection of a removal of a power receiver and/or a termination of a power transfer operation (in particular if this is due to a detection of an absence of a power receiver).

The idle phase may be a phase wherein no power receiver is detected to be present or coupling to the transmitter coil 103 or the first communication coil 309. In the idle phase, there may be no coupling to and/or communication link with any power receiver.

The object detector 311 may thus be arranged to detect if an object is brought sufficiently close to the power transmitter. In many embodiments, the object detector 311 may be arranged to detect that a loading of an electromagnetic field generated by the transmitter coil 103 or the first communication coil 309 exceeds a given threshold. This will typically be due to the presence of an inductor or metal coupling to the respective power transmitter coil, and thus the loading of the transmitter coil 103 or first communication coil 309 provides a good indication of whether an object, which specifically may be a power receiver, is present.

The object detector 311 may specifically detect an object being present if a loading of the first communication coil 309 or the transmitter coil 103 as appropriate exceeds a threshold. The loading of a coil may be determined as the power loss/resistive value provided by the coil. In many embodiments, the voltage amplitude may be kept relatively constant, and the load may simply be determined as a current amplitude (such as specifically an RMS value).

The object detector 311 is coupled to a first controller 313 which is arranged to receive an indication that an object has been detected, and thus the object detector 311 is coupled to the first controller 313 and provides an indication when an object is detected during the idle phase.

In response to receiving such an object detection, the first controller 313 is arranged to control the first communicator 307 to generate the communication carrier from the first communication coil 309. In particular, the first controller 313 is arranged to control the first communicator 307 to generate a drive signal for the first communication coil 309 such that an electromagnetic communication carrier is generated.

The first controller 313 further controls the first communicator 307 to seek to detect load modulation of the communication carrier. Thus, the first communicator 307 generates a communication carrier and proceeds to demodulate any load modulation imposed on this carrier.

In particular, the first communicator 307 receives configuration data being modulated on to the communication carrier. If suitable configuration data is received, it is forwarded to the first controller 313 which is arranged to adapt an operation based on the configuration data. The configuration data may specifically include an (explicit or implicit) indication that the detected object is a power receiver transmitting configuration data that represents that the source is a power receiver. This may in some embodiments be explicit data directly stating that the configuration data is transmitted from a power receiver. In other embodiments, it may be more implicit by the configuration data including data that is only transmitted by a power receiver.

The configuration data may in some cases indicate that the data is transmitted by an update entity which is arranged to provide update data to the power receiver. Thus, the configuration data may indicate that the detected object is an update device which is capable of transmitting update data to the power transmitter. The update data may be data for updating an operation of the power transmitter, or indeed of a power receiver, such as authentication data and/or firmware or software update data that may modify, add, or remove an operation and/or function.

The first controller 313 is arranged to control the operation of the power transmitter dependent on the configuration data. Specifically, if the configuration data indicates that the object is a power receiver requesting power, the first controller 313 is arranged to control the power transmitter to proceed to initiate a power transfer phase in which power is transferred from the power transmitter to the power receiver.

In many cases, when the configuration data indicates that the detected object is indeed a power receiver, the power transmitter will proceed with an initialization of a power transfer in accordance with the technical specifications and standards for the specific wireless power transfer system. For example, for a Ki compatible implementation, the power transmitter will proceed to the configuration phase, the connected phase, and the power transfer phase (or may in accordance with the specifications be terminated during the process).

If, however, the configuration data indicates that the object is an update device which comprises update data, the first communicator 307 may control the power transmitter to enter an update phase during which an update operation may be performed, and specifically in which the update data may be received from the update device. The power transmitter accordingly comprises an update circuit 315 which is arranged to control the first communicator 307 to receive update data from the update entity and to perform an update operation using the update data when in the update phase.

The first communicator 307 may receive the update data from the update device in any suitable way. Specifically, the update controller 315 may control the first communicator 307 to demodulate the load modulation of the communication carrier by the update device. In some cases, the update device may for example automatically start to transmit the update data at a given time after the detection of the communication carrier or e.g. at a predetermined time after the transmission of the configuration data. In other embodiments, the power transmitter may explicitly transmit data to the update device that controls when the update data is transmitted back to the power receiver. For example, the power transmitter may be arranged to explicitly retrieve the update data by transmitting explicit requests to the power receiver.

In many embodiments, NFC functionality may be implemented to retrieve the update data from the update device. The first communicator 307 may specifically read a content of the non-volatile memory embedded into the smart card.

The update circuit 315 may specifically be arranged to perform an update operation which includes updating e.g. the firmware/software of the power transmitter itself. In other cases, the update operation may for example update operational parameters (or default parameters) of the power transmitter, and specifically may be arranged to update stored authentication data, such as indications of authenticated and/or not authenticated power receivers. In other embodiments, the update operation may simply include receiving the update data and e.g. storing it for later use, such as specifically for later transmission to another device, such as e.g. to a power receiver. The update operation may e.g. be a device update operation/ a power receiver update operation/ a power transmitter update operation.

Thus, as a specific example for a Ki cordless transmitter for a kitchen application, the power transmitter may initially be in an idle state with the power transmitter awaiting a power receiver to be introduced to the operating volume of the power transmitter. During an object detection phase following the detection of an object, it is verified that there is one and only power receiver present in the operating volume, and subsequently during e.g. a configuration phase, the power receiver configuration is being sent to the power transmitter. The system may then await a user action to initiate the power transfer. However, if instead, a suitable update device is provided in the operating volume, the same approach may be followed except that the configuration data may indicate that the device is an update device and not a power receiver. In response, the power transmitter may instead of entering the connected phase awaiting a user action, proceed to enter an update phase in which update data is read from the update device and a suitable update process is performed.

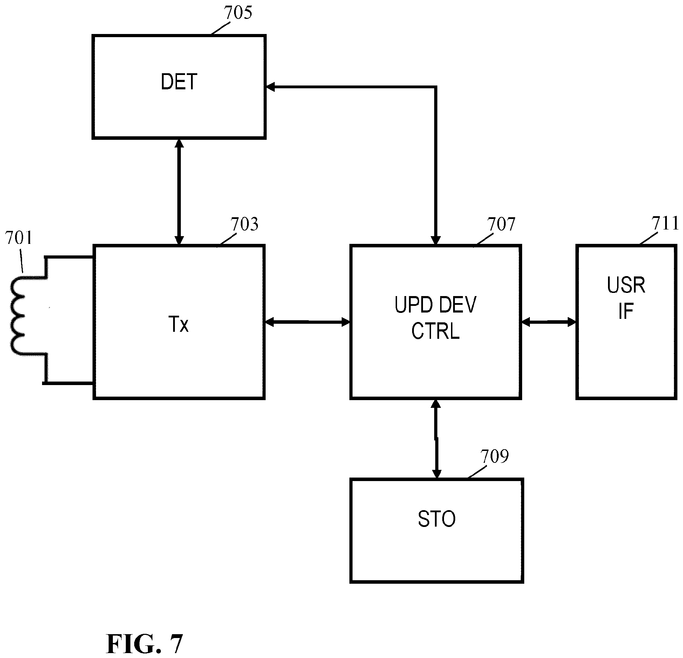

FIG. 7 illustrates an example of some elements of an update device in accordance with some embodiments of the described update approach. The update device may in many embodiments be a dedicated device capable of providing update data to the power transmitter and may in many cases be a relatively low complexity device, such as specifically a Smart Card, RFID card, or similar. In many cases, the update device may have no other functionality than the update functionality and may be a device that is specifically provided and manufactured only to provide update functionality.

The update device of FIG. 7 comprises a communication coil 701 which will be referred to as the third communication coil 701. The third communication coil 701 is arranged to couple to the first communication coil 309 and specifically is arranged to receive/ detect the electromagnetic field/signal generated by the first communication coil 309. Thus, when a communication carrier signal is generated by the first communication coil 309 this may couple to the third communication coil 701 and thus current will be induced in the first communication coil 309.

The third communication coil 701 is coupled to a communicator 703 which will be henceforth be referred to as the third communicator 703. The third communicator 703 is specifically capable of load modulating the electromagnetic generated by the first communication coil 309, e.g. the third communicator 703 may be arranged to change a load of the third communication coil 701 dependent on the data to be received. The third communication coil 701 and the third communicator 703 may specifically be arranged to implement NFC communication functionality and may be arranged to communicate with the first communicator 307 in accordance with the NFC communication specifications.

The update device further comprises a detector 705 which is arranged to detect the presence of a communication carrier from a power transmitter. The detector 705 is in the example coupled to the third communicator 703 and is arranged to be provided with an indication of an induced signal level of the third communication coil 701. The detector 705 may be arranged to detect that a communication carrier is present in response to a detection that the level of the signal/current induced in the third communication coil 701 exceeds a given threshold. The third communication coil 701 is typically part of a resonance circuit tuned to a very different frequency than that of the power transfer signal (e.g. to 13.56MHz for NFC communication) and a simple signal detection is typically sufficient.

Indeed, in some embodiments, the update device may be arranged to be powered by extraction of power from the communication carrier. In such cases, the functionality of the power receiver may inherently power up and start operation when a suitable communication carrier is present. In such a scenario, the detection may inherently be deemed to have occurred when the update device powers up.

The update device further comprises an update device controller 707 which is arranged to control and execute a number of the functions and operations of the update device.

The update device controller 707 is coupled to a store 709 which stores update data for a power transmitter, and/or in some cases for a power receiver as will be described in more detail later. The update device controller 707 may be arranged to retrieve the update data from the store 709 and control the third communicator 703 to transmit the update data to the power transmitter and specifically to the first communicator 307.

In addition to the update data itself, the update device also transmits configuration data to the power transmitter. The configuration data may be stored in the store 709 and retrieved together with the update data and transmitted to the power transmitter.

As previously described, the configuration data comprises an indication that the update device is indeed an update entity that holds update data for transmission to the power transmitter.

In many embodiments, the communication between the third communicator 703 and the first communicator 307 is in accordance with the NFC communication specification. Indeed, in many embodiments, the update device may be a low complexity NFC device and may specifically be an NFC card, an NFC card emulator, a Smart card, a NFC tag with non-volatile memory, etc.

In some embodiments, the update device may be implemented as e.g. a software application of a computational user device (e.g. mobile phone) that may identify as a update device, and specifically may identify as/ emulate being a smart card containing update data such as relevant firmware or e.g. revocation keys.

In many embodiments, the configuration is specifically transmitted in an NFC Data Exchange Format, NDEF, message of a Near Field Communication, NFC, protocol used by the communicator. The use of NFC and in particular NDEF messages for transmitting the configuration data provides a highly efficient and reliable approach while allowing a low complexity and facilitated operation and implementation.

In some embodiments, the update device may be arranged to extract power from the power transfer signal. However, this power extracting will typically be very small and substantially insignificant in comparison to the power levels of a power extraction by a power receiver during a power transfer phase.

In many embodiments, the update device may be a device that is not powered by the power transfer signal, and specifically which is not a power receiver arranged to/ being capable of performing a power transfer with the power transmitter using the power transfer signal.

In particular, the update device may in some cases comprise an internal power source, and e.g. may be some embodiments be battery powered by an internal battery. In yet other embodiments, it is possible that the update device may be powered from an external source. Indeed, in some embodiments, the update device may even be a device that is arranged to be powered by being plugged into the mains power supply.

However, in many embodiments and implementations, the update device may be a device that is powered by the communication carrier. In particular, the update device may in many cases be a low complexity and low power device that is arranged to extract power from the communication carrier to power the required functionality for transmitting the configuration data and the update data. In order to maintain a low power consumption to enable or facilitate such power extraction, the functionality of the update device may typically be kept to a minimum in order to store the data and transmit it to the power transmitter. For example, an NFC smart card may comprise only minimal functionality for storing and communicating with the complementary NFC functionality of the power transmitter.

In many cases the functionality for extracting the power from the communication carrier may also be kept as simple as possible. For example, in many cases, the update device controller 707 may comprise a rectifier (e.g. a diode or diode bridge), a small smoothing capacitor, and possibly a voltage regulator for providing a regulated DC voltage to e.g. an embedded microcontroller or microprocessor to perform the communication with the power transmitter.

The third communicator 703 is arranged to transmit the configuration and update data to the power transmitter by load modulating the communication carrier. For example, the third communicator 703 may be arranged to switch in and out a load of the third communication coil 701 in line with the data symbols that are to be transmitted.

Thus, as a specific example, when the power transmitter detects the presence of an object, it may proceed to generate a communication carrier which in some cases are then used to communicate with a power receiver (e.g. an NFC front end) to establish a communication and control loop with the power receiver in order to initiate power transfer. However, in cases where the object is not a power receiver requesting power transfer, but instead is an update device with update data, the power transmitter proceeds to establish a communication, and typically control loop, with the update device such that the update data is transmitted to the power transmitter. The update device specifically transmits configuration data that allows the power transmitter to determine that the object is indeed such an update device with update data.

In some embodiments, the update device may also be arranged to be able to receive data from the power transmitter. For example, the third communicator 703 may be arranged to demodulate and decode e.g. AM modulation of the communication carrier by the power transmitter. In such cases, the power transmitter may e.g. transmit control or configuration data to the update device that may allow the update device to adapt the operation for the specific power transmitter. For example, the update device may comprise update data for a number of power transmitters and the power transmitter may transmit data indicating e.g. the type or manufacturer of the power transmitter, In response, the update device may extract/ select the corresponding update data and transmit it to the power transmitter.

In some embodiments, the power transmitter may be arranged to transmit an update process complete indication to the power receiver with the update process complete indication being transmitted when a given update process has been performed. The update process may for example be that of receiving the update data from the update device or may e.g. be the full update process. For example, the update process complete indication may be transmitted when the power transmitter has completed updating a revocation list or when a firmware update has been successfully completed.

The update device may in such cases comprise a user interface 711 and the update device may generate a user alert in response to receiving the update process. Thus, when the update process complete indication is received, an alert may be provided to the user, e.g. specifically to indicate to the user that the update has been successful and/or that the update device can be removed and the power transmitter is available for normal power transfer.

The user interface and alert may typically be kept simple and may for example simply be a LED or buzzer merely being switched on. For example, it may be advantageous for an update device in the form of a smart card to implement a user interface that can e.g. indicate that the content of the particular card has been applied to the power transmitter, and that the card can be removed.

In many embodiments, the update data may comprise authentication data and the update controller 315 may be arranged to update stored authentication data based on the received authentication data. For example, in many embodiments, the received update data may include indication of at least one device/entity identity/entity as being authenticated or not authenticated. For example, the update data may in many embodiments include an indication of one or more identities for which authentication has been revoked/ granted.

In many embodiments, the update data may comprise power receiver authentication and specifically may include a list of one or more power receivers that has been authenticated and/or for which authentication has been revoked. The power transmitter may keep a local list of power receivers that are allowed to be provided power and/or a list of power receivers that are not-allowed to be provided power. Specifically, the power transmitter may keep a list of power receiver identities that may be supported by a power transfer. Additionally or alternatively, it may keep list of power receiver identities that may not be supported by a power transfer. Thus, a list of authenticated and/or non-authenticated power receivers may be stored by the power transmitter.

In such cases, the update data may indicate that a specific power receiver identity may now be added to and/or removed from the list of authenticated devices and/or a list of non-authenticated devices. The update controller 315 may accordingly when receiving such update data modify the list by removing or adding the indicated power receiver to the list of authenticated devices and/or the list of non-authenticated devices. Typically, the power receivers may be indicated by a power receiver identity (which may be shared by a group of power receivers, such as e.g. an indication of a type or brand of power receivers).

When a new power receiver is detected and power transfer initialization is performed, the process may include the power receiver transmitting an identity (e.g. a unique device identity, or a shared identity such as a power receiver type or manufacturer) to the power transmitter. The identity may be compared to the stored list(s) and if it is found to be on a list of authenticated power receivers, the power transfer initialization may proceed to the power transfer phase. If the identity is on a list of non-authenticated devices, the initialization of the power transfer phase may be terminated. If the identity is not on a list of authenticated devices or non-authenticated devices, the power transmitter may in different embodiments and scenarios take different approaches. For example, in some embodiments (e.g. if only a list of authenticated devices are stored), the power transmitter may terminate power transfer phase initialization if the received identity is not on the list of authenticated devices. In some embodiments (e.g. if only a list of non-authenticated devices are stored), the power transmitter may proceed with power transfer phase initialization if the received identity is not on the list of non-authenticated devices. In some embodiments where the power transmitter may store both a list of authenticated devices and a list of non-authenticated devices, the power transmitter may e.g. proceed to the power transfer phase if the identity is not on either list but with e.g. the operation in the power transfer phase being constrained (e.g. to a lower power level).

Thus, the approach may allow an efficient way of updating and managing authentication data determining which power receivers can be supported and may not be supported. The approach may enable that such data can be dynamically updated, and that the system can be continuously adapted to reflect changes in authentication. For example, it may be found that a number of power receivers that were previously considered to perform in accordance with standards are in fact not fully compliant and/or may have previously undiscovered faults that could e.g. impact operational safety. In such cases, it may be desired that previously authenticated power receivers are desired to have that authentication removed. This may be effectively be achieved e.g. by providing a smart card that can be detected by the first communicator 307 and which provides a list of power receivers to be revoked.

In order to ensure that the user updates the system to reflect such issues, it may e.g. be implemented that if no update data is received for a given duration, all power receivers will be considered to be revoked until a suitable update device with suitable update data is provided.

In some embodiments, the update data may comprise software/ firmware update data for the power transmitter and the update controller is arranged to update software/firmware of the power transmitter using the received software/firmware update data.

The software/firmware data may specifically enable additional functions or operations to be introduced to existing power transmitters, including potentially proprietary functions and operations. Thus, the approach may allow a practical approach for allowing new functionality to be introduced to deployed power transmitters without requiring any of these to have any functionality for communicating with e.g. remote servers or the Internet. Similarly, the approach may allow functions, routines, and/or operations to be updated or modified. Specifically, software/firmware may be provided that can directly replace existing software/firmware implementing a specific function. Such an approach may in particular be suitable to address and repair errors, bugs, or faults in distributed power receivers.

In some embodiments, the update data may indicate that some software/ firmware should be discarded or removed from the operational software of the power receiver. For example, the update data may indicate that a specific function or operation should be removed and no longer be available.

In many embodiments and applications, it may be desirable for the update approach to be flexible and adaptable. In particular, it may be desirable for the approach to simultaneously be used for different functions and purposes, including in particular for different update purposes.

In some embodiments, the update data may include an indication of what type of update data is provided by the update device. Specifically, in some embodiments, the update device may be arranged to include an indication of whether the update data that is (to be) transmitted to the power transmitter is software/firmware update data or authentication update data. The update controller 315 may then adapt the update operation in dependence on the type of update data. For example, if the update data is indicated to include firmware update data, the update controller 315 may proceed to receive the firmware update data and initiate a firmware update. Conversely, if the update data is indicated to include authentication update data, the update controller 315 may proceed to receive the authentication update data and initiate an authentication update, such as modifying a list of authenticated or non-authenticated devices. Indeed, in some embodiments, the same update device, e.g. the same Smart Card, may provide both e.g. authentication update data and firmware update data. In such cases, the type indication may indicate that both of these types of update data are/can be provided and the power transmitter may proceed to select one of the update operations or indeed may typically perform both update operations. It will be appreciated that whereas firmware and authentication updates are two operations that are particularly suitable for the described approach, other types of update data and update operations may be performed in other embodiments.

A specific example of a power transmitter operation based on communication in accordance with the NFC-A specification is shown in FIG. 7. In the example, after a suitable NFC-A technology device has been detected in the vicinity of the power transmitter, the power transmitter reads the headers of NDEF records and proceeds according to Ki cordless kitchen state diagram if a Ki cordless kitchen specific record was found. If not, the wireless power transmitter scans for other relevant NDEF records, which may for example include:
- A Ki revocation list configuration message. Receiving this, the revocation list in the power transmitter can be updated. It is often advantageous to implement standardized configuration messages for certified appliances.
- A proprietary firmware update configuration message. This may e.g. allow the power transmitter to initiate the firmware update according to proprietary realization.

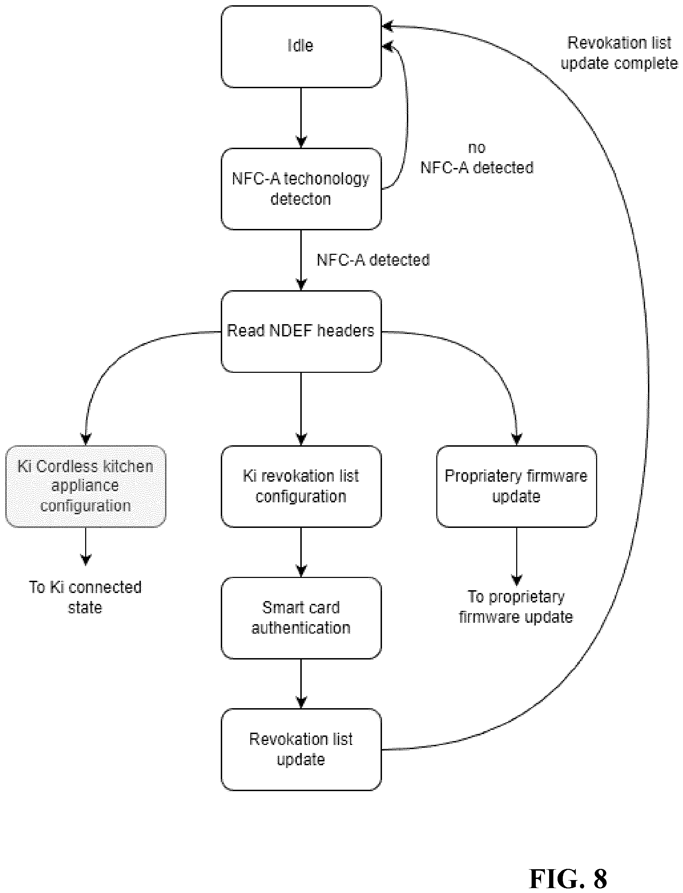

As illustrated in FIG. 8, the power transmitter operation may branch off to respectively normal power mode initialization, authentication update, or firmware update depending on the received NDEF message.

As previously mentioned, the update device may in many embodiments be a dedicated device such as specifically a smart card or an RFID card. However, in some cases, the update device may also be a power receiver, and may in addition to providing the update functionality also include power receiver functionality for extracting power from the power transfer signal during a power transfer phase. For example, in many embodiments a smart phone or connected Kitchen appliance may be capable of establishing a power transfer to extract power from the power transfer signal e.g. to charge a battery. In addition, it may be capable of storing and providing update data, i.e. it may also be an update device.

The power receiver which is also an update device may transmit configuration data which indicates that the device is both a power receiver requesting power transfer and an update entity capable of providing update data. The power transmitter may in this case decide whether to perform an update operation or to proceed with a power transfer initialization (or indeed may in some cases e.g. decide to first update the power transmitter and then initiate the power transfer operation. The power transmitter may accordingly make selections of how to proceed. For example, in such cases the power transmitter may proceed to perform an update operation if the configuration data indicates that the update data is suitable for the specific power transmitter and/or if the power transmitter has not already been appropriately updated (for example, the version number of the update data may be compared to a version number of the current data and the update may only be performed if the update data has a later version number). Otherwise, the power transmitter may proceed with initializing power transfer.

Such approaches may be highly advantageous in many systems. For example, it may allow manufacturers to update deployed devices by including update functionality in new power receivers that are manufactured and deployed later. Whenever such a power receiver is used with a power transmitter that is not updated to the level of the update data comprised in the power receiver, the power transmitter may enter an update process. If, however, the power transmitter has already been updated, normal power transfer operation is performed. In this way, an ad-hoc update of existing and deployed power transmitters can be achieved simply by the user performing normal power transfer operations and the power transmitter and power receiver adding an updated process when appropriate.

The previous examples have focused on scenarios where the update data is for updating of the power receiver itself. However, in some embodiments, the update data may for example be for a power receiver and the power transmitter may be able to enable, support, or control the update of a power receiver that couples and connects to the power receiver.

In some embodiments, the update data may comprise power receiver update data and metadata may further be included to indicate that the update data is indeed for a power receiver, including possibly defining parameters or properties of a suitable power receiver, such as manufacturer, model, type etc. It may further indicate whether the update data is e.g. firmware update data or authentication update data.

When receiving such update data, the update controller 315 may store the power receiver update data, e.g. in semi-permanent memory or non-volatile memory. The update device may be arrived and when a power receiver is subsequently presented to and connects with the power transmitter, the update controller 315 may as part of the initialization and/or detection process proceed to determine whether the power receiver has properties matching those stored for the power receiver update data (e.g. it is the appropriate manufacturer and/or model, or indeed for some update data (e.g. authentication data) all power receivers may be considered to match the properties stored for the update data). If indeed, the power receiver properties match those for the power receiver update data, the update controller 315 may proceed to transmit the power receiver update data to the power receiver using a communication link established with the power receiver. Specifically, as part of the connection and initialization of a new power receiver being detected, a communication link is established between the power transmitter and the power receiver, and if the power receiver has the appropriate data, the stored power receiver update data is retrieved from memory and transmitted to the power receiver.

The power receiver may then proceed to perform a corresponding update operation, such as e.g. update a firmware routine or an update of authentication data (e.g. a list of authenticated or non-authenticated power transmitters). Specifically, the power receiver may, as indicated in FIG. 6, comprise a power receiver update controller 613 which receives the power receiver update data and proceeds to perform the corresponding update action.

As mentioned, in many embodiments, the update data may be linked to a required power receiver property that is indicated by metadata transmitted with (or considered to be included in) the update data. Such a power receiver property indication may specifically be indicative of the property of the power receiver such as: a power receiver identity indication; a power receiver device model indication; and a manufacturer indication.

The update controller 315 may then proceed to transmit the update data to a connected power receiver only if this transmit data indicating that it has a matching property. Thus, specifically, the update controller 315 may only transmit the update data to the power receiver if this is by the appropriate manufacturer, is the appropriate model and/or indeed is specific power receiver.

Such an approach may allow a flexible and user friendly update process for power receivers that are deployed in a given system. It may allow updates to be distributed on an ad-hoc basis.

In some embodiments, the received update data may further be stored in the power receiver and subsequently uploaded to other power transmitters. The power receiver may specifically be a power receiver that also includes functionality for operating as an update device as previously described. In this case, the power receiver may receive update data from a power transmitter, store it in suitable e.g. non-volatile memory and subsequently when connecting to a new power transmitter operate as an update device and upload the data thereby performing a means of distributing update data in an existing wireless power transfer deployment.

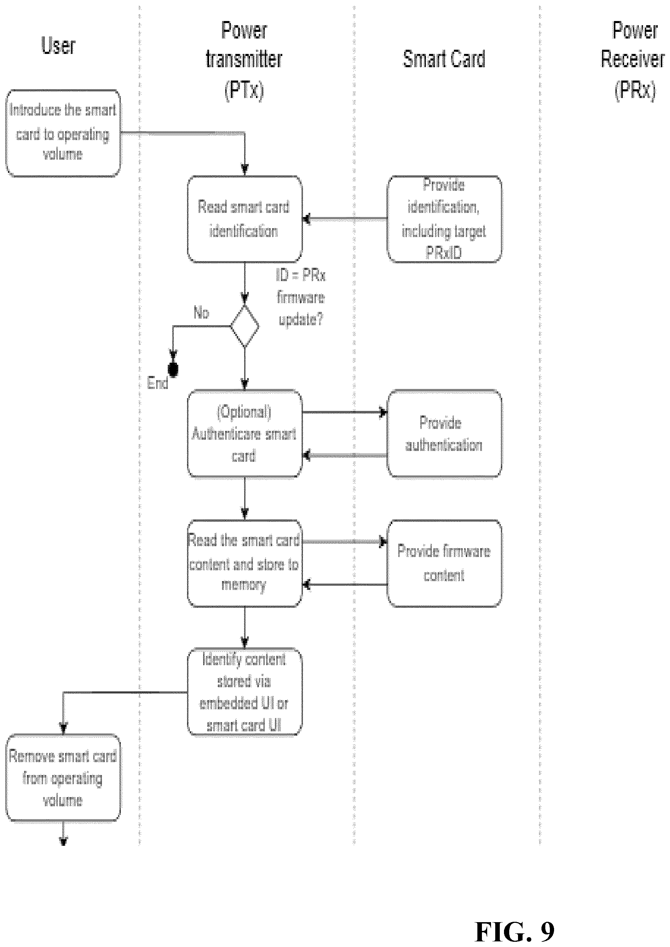

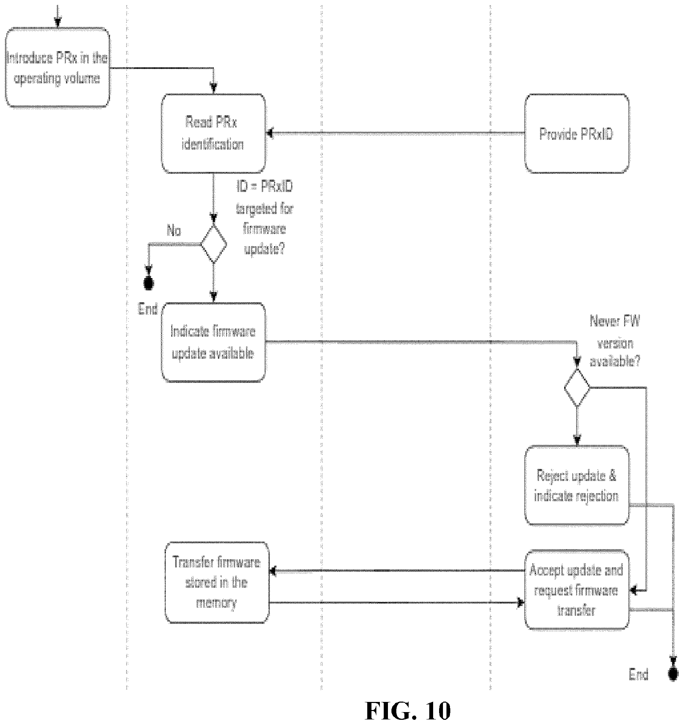

The approach of using an update device may accordingly also be used to update e.g. the firmware of a power receiver (appliance). In this case, a smart card can contain the proprietary receiver firmware image. The card can be placed on top of the power transmitter, and the power transmitter can store the power receiver firmware along with target receiver identification. When the target power receiver is installed on top of the power transmitter, the firmware can be transferred to the power receiver. FIGs. 9 and 10 illustrate an example of a possible workflow for such power receiver firmware update process.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an electromagnetic power transfer signal when in a power transfer phase; the power transmitter (101) comprising:
an output resonance circuit comprising a transmitter coil (103) and at least one capacitor (303) forming a resonance circuit;
a driver (301) arranged to generate a drive signal for the output resonance circuit (103, 303) to generate the electromagnetic power transfer signal when in the power transfer phase;
a communicator (307) arranged to communicate with the power receiver (105), the communicator (307) being arranged to generate a communication carrier and to receive data load modulated on the communication carrier by the power receiver (105) when in the power transfer phase;
an object detector (311) arranged to detect an object when the power transmitter (101) is in an idle phase;
a controller (313) arranged to, in response to the object detection, control the communicator (307) to generate the communication carrier and receive configuration data load modulated on to the communication carrier, the controller (313) further being arranged to initiate a power transfer phase in response to the configuration data being indicative of a power receiver requesting power transfer, and to initiate an update phase in response to the configuration data being indicative of an update entity comprising update data; and
an update processor (315) arranged to control the communicator (307) to receive update data from the update entity and to perform an update operation using the update data when in the update phase.

2. The power transmitter of claim 1 wherein the update data comprises authentication data and the update processor (315) is arranged to update stored authentication data in dependence on the received authentication data.

3. The power transmitter of any previous claim wherein the update data comprises software update data for the power transmitter (105) and the update processor (315) is arranged to update firmware of the power transmitter (101) using the received firmware update data.

4. The power transmitter of any previous claim wherein the update data comprises power receiver update data, and the update processor (315) is arranged to store the power receiver update data and to subsequently transmit the power receiver update data to a given power receiver subsequently establishing a communication link with the communicator (307).

5. The power transmitter of claim 4 wherein the power receiver (105) update data is linked with a required power receiver property and the update processor (315) is arranged to transmit the power receiver update data to the given power receiver only if this has a property matching the required power receiver property.

6. The power transmitter of claim 5 wherein the update processor (315) is arranged to receive a power receiver property indication from the given power receiver, the power receiver property indication being indicative of the property of the given power receiver and being at least one of:
a power receiver identity indication;
a power receiver device model indication; and
a manufacturer indication.

7. The power transmitter of any previous claim wherein the update data includes an indication of a type of update data being provided.

8. The power transmitter of any previous claim arranged to select between initiating the power transfer phase and initiating the update phase in a case where the configuration data is indicative of both a power receiver requesting power transfer and of an update entity comprising update data.

9. The power transmitter of any previous claim wherein the configuration data is received in an NFC Data Exchange Format, NDEF, message of a Near Field Communication, NFC, protocol used by the communicator.

10. An update device for a wireless power transfer system comprising a power transmitter (101) for wirelessly providing power to a power receiver (105) via an electromagnetic power transfer signal, the update device comprising:
a store (709) arranged to store update data for at least one of a power transmitter (101) and a power receiver (105);
a detector (707) arranged to detect a presence of a communication carrier from the power transmitter (101);
a communicator (703) arranged to transmit configuration data and the update data to the power transmitter (101) by load modulating the communication carrier, the configuration data comprising an indication of an update entity arranged to transmit update data to the power transmitter (101).

11. The update device of claim 10 wherein the update device is arranged to not extract any power from the electromagnetic power transfer signal.

12. The update device of claim 10 or 11 further comprising a receiver (703) arranged to receive an update process complete indication from the power transmitter (101), the update process complete indication being indicative of an update process having completed, and a user interface (709) arranged to generate a user alert in response to receiving the update process complete indication.

13. A power receiver comprising the update device of any of claims 10-12, the power receiver (105) being arranged to extract power from the electromagnetic power transfer signal.

14. A method of operation for a power transmitter (101) for wirelessly providing power to a power receiver (105) via an electromagnetic signal when in a power transfer phase; the power transmitter (101) comprising:
an output resonance circuit comprising a transmitter coil (103) and at least one capacitor (303) forming a resonance circuit;
a driver (301) arranged to generate a drive signal for the output resonance circuit (103, 303) to generate the electromagnetic signal when in the power transfer phase;
a communicator (307) arranged to communicate with the power receiver (105), the communicator (307) being arranged to generate a communication carrier and to receive data load modulated on the communication carrier by the power receiver (105) when in the power transfer phase;
and
the method comprising:
detecting an object when the power transmitter (101) is in an idle phase;
in response to the object detection, controlling the communicator (307) to generate the communication carrier and receive configuration data load modulated on to the communication carrier, initiating a power transfer phase in response to the configuration data being indicative of a power receiver requesting power transfer, and initiating an update phase in response to the configuration data being indicative of an update entity comprising update data; and
receiving update data from the update entity and to perform an update operation using the update data when in the update phase.

15. A method of operation for an update device for a wireless power transfer system comprising a power transmitter (101) for wirelessly providing power to a power receiver (105) via an electromagnetic power transfer signal, the method comprising:
storing update data for at least one of a power transmitter (101) and a power receiver (105);
detecting a presence of a communication carrier from the power transmitter (101); and
transmitting configuration data and the update data to the power transmitter (101) by load modulating the communication carrier, the configuration data comprising an indication of an update entity arranged to transmit update data to the power transmitter (101).
